# EUROPEAN PATENT SPECIFICATION

(11) **EP 4 513 151 B1**
(45) Date of publication and mention of the grant of the patent: **12.11.2025**
(21) Application number: 23192366.5
(22) Date of filing: 21.08.2023
(51) Int. Cl.: G01H 1/00, G01M 13/028, G01M 13/045

(54) **METHOD OF MONITORING A ROTATING MACHINE CONFIGURED FOR ENERGY TRANSFER HAVING A PLURALITY OF SUBSYSTEMS**
VERFAHREN ZUR ÜBERWACHUNG EINER FÜR ENERGIEÜBERTRAGUNG MIT MEHREREN SUBSYSTEMEN KONFIGURIERTEN DREHMASCHINE
PROCÉDÉ DE SURVEILLANCE D'UNE MACHINE ROTATIVE CONÇUE POUR LE TRANSFERT D'ÉNERGIE AYANT UNE PLURALITÉ DE SOUS-SYSTÈMES

(43) Date of publication of application: 26.02.2025
(73) Proprietor: Danfoss A/S, 6430 Nordborg (DK)
(72) Inventor: Enevoldsen, Georg Herborg, 6900 Skjern (DK); Irissappane, Vijayasankar, 6400 Sønderborg (DK); Svendsen, Christian, 6340 Kruså (DK)
(74) Representative: Gulde & Partner

(56) References cited:
- EP-A1- 2 889 593
- CN-A- 109 297 705
- CN-A- 115 468 648

## Description

### Field of the Disclosure

The present disclosure relates to a method of monitoring a rotating machine configured for energy transfer having a plurality of subsystems, each subsystem comprising one cylinder. It further relates to a rotating machine configured for energy transfer with a plurality of subsystems, each subsystem comprising one cylinder.

### Technological Background

Rotating machines are among the most critical machines in a wide range of industries such as (petro)chemical, energy, and oil and gas. Rotating machines with cylinders and/or pistons guided in the cylinders require more maintenance in some applications, compared to other rotating machines. Therefore, it is important to have advanced monitoring systems to monitor various essential mechanical parameters. Among other things, monitoring is based on the detection of oscillations and vibrations.

The causes of dangerous vibrations in machines and systems with moving masses can be very diverse: Unbalance, misalignment, shaft curvature, foundation problems, cavitation, gearing faults in gearboxes, caking on fan blades, vortex vibrations in gases and liquids, electrical or magnetic disturbances, and many other causes.

Oscillations are repeated temporal fluctuations of state variables. In the context of mechanics, oscillations are understood to be the movement of substances or bodies around their point of rest. In the case of periodic (i.e. repetitive) oscillations that are accompanied by a deformation of a body, one speaks of vibrations. Here, both terms are used synonymously. Vibrations are described in terms of three mechanical quantities: Acceleration, velocity and displacement. The three quantities can be converted from each other by differentiation and integration. In practice, the conversion of the quantities is problematic and sometimes impossible, since measurement errors such as noise lead to strong distortions in the result after the conversion. It is characteristic for vibrations that all three quantities change (quasi-)periodically, i.e. a continuously repeating signal course is recognizable. In machines, vibrations are mainly caused directly and indirectly by rotating parts. When observing machine vibrations, it is noticeable that a clear sinusoidal signal, as would generally be expected as the result of a rotary motion, is not always recognizable. Rather, several vibrations from different sources overlap. For example, in addition to the motor shaft, the gears of a connected gearbox, which rotate at different speeds than the shaft, cause vibrations with different frequencies. The superposition of different vibrations makes the evaluation of a vibration signal difficult at first, since it is not recognizable at first glance how the measured signal is composed.

Vibration measurements prove difficult due to the natural mechanical motion of these machines. However, monitoring vibration at various points on the machine is critical to gain insight into the machine and maintain a stable process. Non-contact displacement sensors, piezoelectric accelerometers, linearized (often electrodynamic) vibration velocity sensors, and air-gap sensors are used to collect vibration values.

US 8,082,125 B2 describes a device and a method for condition-based maintenance of hydrostatic displacement units. Acceleration sensors are mounted on the hydrostatic displacement unit, which record vibration data and are connected to an evaluation unit that temporarily stores the vibration data. A communication unit connected to the evaluation unit further transmits this data.

CN 115 468 648 A describes a method for detecting an installation state of a sensor installed on a device. The method includes a self-detection step, wherein a sensing signal of the sensor is acquired, and a characteristic value of the sensing signal is extracted. This characteristic value is compared with a pre-set first reference value in a first comparison and in a second comparison the sensing signals of several sensors are compared with each other, wherein the several sensors are installed on the same device. When the result of at least one of the first comparison and the second comparison is abnormal, an abnormality prompt message is output.

CN 109 297 705 A describes a fault diagnosis method comprising collecting vibration signals of a planetary gearbox. Furthermore, the method includes denoising the vibration signals with MED, performing an empirical mode decomposition (EMD) on the vibration signals, eliminating invalid components and obtaining a large number of effective intrinsic mode functions (IMF) components, then calculating the fuzzy entropy value of each effective **IMF** component and retaining the IMF component with the smallest fuzzy entropy value, and performing the envelope spectrum analysis on the signals of the IMF components with the smallest fuzzy entropy value to analyze the characteristic frequency of the error.

EP 2 889 593 A1 describes a diagnosis method for a hydraulic machine with a rotational shaft, a plurality of cylinders, a plurality of pistons each configured to be guided by each of the plurality of cylinders to reciprocate in relation to rotation of the rotational shaft, and a casing for accommodating the cylinders and pistons. The diagnosis method includes a vibration detection step of detecting vibration of the casing by a vibration sensor disposed on the casing while rotating the rotational shaft in an unloaded state of the hydraulic machine and a determination step of determining, on the basis of a detection result detected by the vibration sensor, whether a piston jump phenomenon which is accompanied by collision and separation of at least one of the pistons with respect to a rotational shaft side has occurred.

A variety of condition monitoring concepts are then based on complex analysis and evaluation of recorded vibrations. With a downstream analysis, a deeper diagnosis of the vibration causes is possible. FFT-, cascade-, waterfall-, orbit-, polar-, Bode-, or Nyquist- and wave center diagrams are the typical analysis forms in the time or frequency domain.

It is thus an object of the present disclosure to overcome or reduce at least some of the drawbacks of the prior art and to provide a method of monitoring a rotating machine configured for energy transfer having a plurality of subsystems, each subsystem comprising one cylinder.

The given task is solved by the subject-matter of the independent claims. Advantageous embodiments of the invention can further be gained from the dependent claims.

### Summary of Invention

The invention is defined by the appended claims.

According to one aspect of the present disclosure, a method of monitoring a rotating machine is provided, the rotating machine being configured for energy transfer and having a plurality of subsystems, wherein each subsystem comprises one cylinder. In the method, first a measurement signal of a vibration of the rotating machine is obtained. Then the vibration measurement signal is sampled into a plurality of vibration subsignals, wherein each vibration subsignal corresponds to one full revolution of the rotating machine. Moreover, a reference vibration subsignal is determined based on an average of the plurality of vibration subsignals. The reference vibration subsignal is then sampled into a plurality of signal snippets, wherein each signal snippet is assigned to one subsystem of the rotating machine, wherein each signal snippet corresponds to 1/n of a full rotation of the rotating machine, where n is equal to the number of subsystems. In other words, each signal snippet corresponds to 1/n of a full rotation of the rotating machine where n is equal to the number of subsystems. Then a cross-correlation analysis of the plurality of signal snippets is performed for identifying a potential fault state of the rotating machine, wherein a breakdown of a correlation between the signal snippets indicates the potential fault state.

The method according to the invention makes it possible to monitor the rotating machine, in that through data processing of the available vibration data, operating parameters and environmental parameters can be normalized and do not affect the result of the determination. Furthermore, the method is independent of the positioning of potentially used sensors for measurement data acquisition.

The rotating machine preferably includes axial piston pumps (positive displacement pumps) or isobaric pressure exchangers. This machines usually works in operating ranges with a speed of 500-2000 rpm, i.e. 10-20 revolutions per second.

The measurement signal of a vibration of the rotating machine is preferably obtained by live measurements on the rotating machine and/or by reading data from a memory. The latter has the advantage that the method can be performed on a backend server remote from the actual rotating machine. Vibrations can preferably be measured optically (laser vibrometer) or by means of accelerometers. Which type of acceleration sensor (piezoresistive, capacitive, piezoelectric) is used must be adapted to the application and the associated frequencies to be measured. A vibration sensor for capturing live measurements is preferably a piezoelectric sensor that captures vibrations. This preferably measures accelerations, velocities or regular vibrations. Further, the method is advantageously agnostic to the positioning of the vibration sensor, which could be for example mounted to the machine base.

The obtained vibration measurement signal preferably comprises measured values over a predetermined (first) time period, preferably a period of a plurality of seconds, for example of 2 seconds. This provides measurement data covering a sufficient number of full revolutions of the rotating machine and its subsystems, allowing for reliable derivations during the subsequent method steps. Preferably, the vibration measurement signal is obtained repeatedly, preferably after each end of a predetermined (second) time period, which preferably is a period of a plurality of minutes, for example the vibration measurement signal is obtained every 30 minutes. In this way, the rotating machine is reliably monitored at sufficient intervals.

The obtained vibration measurement signal is cut into a plurality of vibration subsignals, where each subsignal refers to one full revolution of the rotating machine. In other words, the data is parallelized into "identical" subsignals, where identical refers to their temporal length and not the course of the measurement signal of different subsignals. The vibration subsignal corresponds to one full revolution of all subsystems in the rotating machine. Preferably, the vibration measurement signal comprises a duration resulting in a number of 10 to 100 such vibration subsignals. Depending on the rotation frequency this preferably determines the (first) time period as mentioned above. This provides a number of vibration subsignals which, on the one hand, enable precise and meaningful statements to be made in the further course of the method and, on the other hand, keep the computational effort within limits.

These subsignals are averaged to eliminate stochastic noise, such as pressure pulsations (these occur at low frequencies) and pulsations due to the operation of the machine (valves, switching operations, etc., that occur at high frequencies). After this step, an average reference vibration subsignal per revolution is obtained, which can be considered as a "machine fingerprint".

The reference vibration subsignal, i.e., the "machine fingerprint", is then again sampled (cut) into signal snippets, wherein each of these signal snippets relates to one subsystem. Therein, each subsystem comprises one cylinder, while each subsystem may also comprise further elements, such as washers, O-rings, etc. Each signal snippet can thus be considered the "fingerprint" of one subsystem of the rotating machine.

The plurality of signal snippets is then cross-correlated, i.e. the signal snippets are compared among each other. Preferably, known cross-correlation algorithms are used for such cross-correlation. The inventors have found that in a new rotating machine, these signal snippets are usually highly correlated, i.e. they hardly deviate from each other or only within acceptable tolerances. The inventors have further found that it indicates a problem with one of the subsystems when the correlation breaks down, which allows using such cross-correlation analysis of signal snippets for determining a potential fault state of the rotating machine.

Consequently, this method according to the invention enables calibration-free and environment-independent monitoring of the rotating machine and its subsystems. This allows machine faults to be reliably detected and appropriate measures to be taken in good time, especially before actual damage occurs, since its threat can be detected at an early stage. In particular, failure symptoms due to aging and stress in rotating hydraulic energy machines, especially axial piston pumps and rotary pressure exchangers, occur increasingly during operation, and the method helps to monitor the condition of the machine. It is also advantageous that it is basically irrelevant for the invention where on the machine sensors are arranged, finally the measurements represent the behavior of the subsystems encompassed by the machine, which define and shape the system to be measured and due to the comparison of the subsystems the result or the statements about potential problems are uninfluenced by the arrangement of a sensor.

In a preferred embodiment of the present disclosure, the cross-correlation analysis comprises performing a comparison of the plurality of signal snippets among each other. Additionally or alternatively the cross-correlation analysis comprises determining deviations between the plurality of signal snippets among each other. This enables one for identifying the potential fault of at least one of the subsystems based on a result of the comparison. Preferably, all signal snippets are compared with each other. This provides a very accurate picture of the subsystems, as all subsystems are included in the analysis. A comparison is preferably made in pairs by signal snippets from two different subsystems. Accordingly, the number of comparisons and the resulting comparison results is preferably calculated by the binomial coefficient n over k, where n is the total amount of subsystems and k is the number of subsystems selected for comparison. With two subsystems, there is therefore one comparison with one resulting result, with three subsystems there are three comparisons with three resulting results, with four subsystems there are six comparisons with six resulting results, and so on. Different situations can occur. This approach is particularly advantageous for qualitatively assessing the behavior of the subsystems. A comprehensive and differentiated picture of the subsystems is provided, since subsystems that do not show behavior as expected or behavior that differs from the other subsystems stand out.

The analysis of the deviations is preferably based on different methods of signal processing. Among other things, the deviations are preferably determined by comparing the local and/or global extrema of the signal snippets. On the one hand the amplitude can be considered and on the other hand also the number of local extrema. For example, the amplitude of global maxima of the signal snippets can be compared with each other and a deviation can be determined on the basis of this. If, for example, a signal snippet belonging to a subsystem has a maximum that exceeds the other maxima of the signal snippets belonging to the other subsystems, e.g., more than a predetermined threshold (e.g., more than 3 times a standard deviation σ), this serves as an indication of a faulty subsystem. Also, a particularly high number of local extrema to be assigned to a subsystem that exceeds the number of local extrema to be assigned to the other subsystems is an indication of faulty behavior. In addition, the area integrals of the signal snippets and/or the differentials of the signal snippets can also be used to determine a deviation between them. A combination of the previously mentioned factors for the determination of a deviation thereby increases the reliability and accuracy of the derivations, which can then be derived from a combined deviation, preferably with suitable weighting of the deviations based on the different factors. Signal analysis also provides suitable methods for determining the deviations. For example, there are high deviations in comparisons of one subsystem with the other subsystems, whereas the comparisons of the other subsystems with each other give similar results, which furthermore deviate from the results of the one subsystem with the other subsystems. This would indicate an error of one subsystem, as it shows a different behavior than the other subsystems.

According to a preferred embodiment of the invention, a comparison of the plurality of signal snippets with corresponding segments of the plurality of vibration subsignals is performed. Thus, signal snippets based on the reference vibration subsignal previously obtained by averaging are compared to the corresponding segments of the plurality of vibration subsignals that are not averaged. In other words, the averaged signal snippet is compared to a non-averaged segment that refers to the same subsystem. This allows statements to be derived as to whether errors are present that occur sporadically over time and, in particular, do not repeat periodically and would not otherwise be detected as a result. Preferably, this comparison is made in combination with the comparison of the signal snippets among each other, so that on the one hand the previously described findings are obtained and on the other hand statements about the behavior of the subsystems in comparison with each other are made possible.

Preferably, deviations between the plurality of signal snippets and corresponding segments of the plurality of vibration subsignals are determined. The deviations can be determined based on the factors described before. This allows statements to be made about whether errors are present that occur sporadically and, in particular, do not repeat periodically and would not otherwise be detected. Preferably, this comparison is carried out in combination with the determination of the at least one deviation of the signal snippets among each other, so that on the one hand the previously described findings are gained and on the other hand statements about the behavior of the subsystems in comparison to each other are made possible.

According to a further preferred embodiment, the cross-correlation analysis comprises determining a reference signal snippet based on an average of the plurality of signal snippets and performing a comparison of the reference signal snippet with at least one signal snippet and/or determining at least one deviation between the reference signal snippet and at least one of the plurality of signal snippets. Through this cross-correlation analysis, the identification of the potential fault of at least one of the subsystems based on a result of the comparison can be done in more detail and more accurately. Preferably, the comparison of the reference signal snippet is performed with each one of the plurality of signal snippets, what improves the accuracy for identifying a potential fault of at least one of the subsystems based on a result of the comparison. The average (mean value) is a number that is determined from given numbers according to a specific calculation rule. Common calculation rules are the arithmetic, geometric and quadratic mean. In the present case, the average is not restricted to a specific calculation rule. The median is also an average in the sense of the present invention, whereby the median describes a value which divides the data set into two halves.

According to this embodiment the reference signal snippet is an expected value of the plurality of signal snippets. Preferably, a property of the reference signal snippet, preferably an amplitude of a global maximum of the reference signal snippet, is also the expected value of the corresponding property of the plurality of signal snippets. In this case, this further preferred embodiment comprises determining at least one deviation between a property of the reference signal snippet and a corresponding property of the at least one of the plurality of signal snippets. Preferably, a potential fault state is identified if the determined deviation exceeds an interval of a deviation that is plus-minus 3 times a standard deviation σ from the expected value. In other words, a corresponding property of the at least on signal snipped is outside the interval of a deviation that is plus-minus 3 times a standard deviation σ from the expected value. For example, if the amplitude of the compared signal snippet is within the interval plus-minus 3 times a standard deviation σ around the expected value, the amplitude of the reference signal snippet, the condition is not fulfilled, which lets one assume a working subsystem.

Especially in the case of first-time or near-first-time commissioning, where the subsystems are new and have not yet been subjected to any load and consequently have no weak points or errors, a reference signal snippet can thus be determined that is representative of the plurality of subsystems. Small deviations, which are unavoidable, for example due to materials and manufacturing, do not pose a problem or indicate errors. By determining a reference signal snippet based on the average, this is considered and a representative signal is available for comparison, which can be regarded as an error-free reference subsystem. The effort for a comparison can also be reduced by this, since a subsystem is now only compared with the reference signal snippet. In the case where one or more subsystems exhibit behavior that differs significantly from the other subsystems, this can be detected by comparing a signal snippet with the reference signal snippet. The deviations can be determined based as mentioned before. Accordingly, the signal snippets are used for the determination of the deviations, whereby each signal snippet is assigned to a subsystem. They are adjusted for possible interference and noise as well as random deflections, so that such mechanisms have less influence on the determined deviation. An impending failure of a subsystem is then indicated by an increased deviation between the signal snippet of this subsystem and the reference signal snippet.

An additionally preferred embodiment of the method, comprises a step of performing a comparison of the reference signal snippet with a corresponding segment of the plurality of vibration subsignals. The reference signal snippet is a kind of fingerprint for each subsystem. The reference signal snippet is a kind of "ideal value", particularly for initial commissioning or short periods of operation, in the sense that no errors are present or to be expected in the components of a subsystem at such a time. Accordingly, the reference signal snippet serves as a suitable comparison object. By comparing the corresponding segments with the reference signal snippet, it is possible to assess the extent to which the segments of the subsystems correspond to this ideal behavior. The plurality of vibration subsignals each comprise signals corresponding to one full revolution of the rotating machine and include the segments which in turn refer to a subsystem. Thus, information about the rotating machinery and its subsystems is available at a plurality of time intervals. If these exhibit atypical behavior, this can be identified since the segments do not represent an averaging.

Preferably, deviations between the reference signal snippet and a corresponding segment of the plurality of vibration subsignals are determined. The deviations can be determined based as mentioned before. This allows statements to be made about whether errors are present that occur sporadically and, in particular, do not repeat periodically and would not otherwise be detected. More preferably, this comparison is carried out in combination with the determination of a deviation between the reference signal snippet and at least one of the plurality of signal snippets, so that on the one hand the previously described findings are gained and on the other hand statements about the behavior of the subsystems in comparison to each other are made possible.

According to another preferred embodiment of the invention, the method comprises a step of performing a comparison of the at least one deviation with a first threshold value. The deviations may be any of the deviations described in the previously preferred embodiments. Preferably, the first threshold value is a relative threshold value. In other words, the threshold value is preferably a percentage value representing a percentage deviation defined by the user and deemed permissible. This allows, for example, to consider still existing random deviations due to scattering around an expected value.

In a further preferred embodiment of the second preferred embodiment, the potential fault of the rotating machine is determined when the at least one deviation exceeds the first threshold value. If the deviation exceeds the first threshold value, there is a high probability that an error is actually present. An imminent failure or problem of one subsystem for example is marked by a deviation from an average or a median of the signal snippets, wherein the first threshold is preferably used for such deviation as a relative threshold.

Preferably, a warning message is outputted and/or the rotating the machine is stopped when the potential fault of the rotating machine is identified. It enables users to be informed about the potential fault of subsystems, i.e. if a subsystem is defective, there is a warning indicating an error. Furthermore, an automatic stop of the machine is executed and a specialist can make further investigations and replace faulty components. This can avoid long downtimes that can occur if a fault is not detected in time and this can result in damage to both the affected component and parts of the system or the entire system. In addition to the increased repair costs, this leads to high costs due to the extended downtime. The process according to the invention avoids this.

In a further preferred embodiment of the invention, the method further comprises steps of performing a comparison of the at least one deviation with the first threshold value and a second threshold value, outputting a warning message if at least one deviation exceeds the first threshold and stopping the machine if at least one deviation exceeds the first threshold and the second threshold. In this way, different situations are distinguished which, in a still functional and tolerable condition of the rotating machinery, do not lead to a stop of the machine if the deviation is still in a range which prompts an operator to further investigations, whereby these are then carried out at a suitable time which can be suitably integrated into operating procedures. However, if the deviation is in a range that can be considered critical for the condition of the rotating machine, an immediate stop may be necessary and will prevent major consequential damage.

According to another preferred embodiment of the invention a rotational frequency of the rotating machine is determined wherein the sampling of the vibrational measurement signal is based on the rotational frequency. The sampling is supported and made more precise by the previously determined rotational frequency. Based on the knowledge about the number of subsystems as well as the rotational frequency in combination with the also known time length of the vibration measurement signal, it is possible to perform an exact division of the whole signal into the vibration subsignals, which correspond exactly to one full revolution of the rotating machine.

Preferably, the rotational frequency is determined based on a detected sensor value and/or the vibration measurement signal. The detected sensor value and/or the vibration measurement signal characterize the rotational frequency. The rotation frequency of the rotating machine is a main component in the frequency spectrum of the generated mechanical vibrations, so it is possible to determine the rotational frequency on the basis of the vibration measurement signal. Preferably light barriers or other switching sensors are used to measure the time it takes for a rotating machine to complete one revolution. Accordingly, the rotational speed can then be determined.

According to an additionally preferred embodiment, the method further comprises obtaining at least one other measurement signal of a vibration of the rotating machine and performing the method according to the invention for the at least one other measurement signal. This allows a dynamic development of the rotating machine to be mapped and tracked.

A preferred embodiment of the invention further comprises the step of determining deviations between the plurality of signal snippets obtained based on the measurement signal, determining deviations between the at least one other plurality of signal snippets obtained based on the at least one other measurement signal and sorting the plurality of signal snippets and the at least one other plurality of signal snippets based on the respective deviations. In particular, this avoids "averaging out" signals that actually indicate that one subsystem is already deviating from the others. Deviations include deviations among each other, but also between the plurality of signal sections or the other plurality of signal sections and a mean or median and/or a respective reference signal section or another reference signal section. This is done by sorting the signal snippets e.g. according to their deviation from each other and/or preferably from a median/average. For example, one starts with the "worst" signal snippet, i.e. the one with the largest deviation from the other subsignals or from the median, and then continues in the correct chronological order. This does not necessarily allow 1:1 identification of pistons, e.g., if an originally "worst" subsystem is overtaken by another subsystem that develops a fault. In the current scheme, this subsystem replaces the original worst subsystem as the first subsystem in the sorting order. However, this method is sufficient for detecting the fault of a single subsystem. Advantageously, only the distance between the first of the ordered sub-snippets and the median needs to be monitored for a threshold.

According to a further preferred embodiment, an assignment of the subsystems to the assigned signal snippets based on a detected and/or obtained assignment signal is determined. Preferably an assignment of the subsystems to the assigned segments of the plurality of vibration subsignals based on a detected and/or obtained assignment signal is determined. Vibrations occur with, for example, different phase positions. In many cases, it is only by measuring the phase position that the causes of the vibrations can be analyzed. By assigning of the subsystems to the assigned signal snippets the method even provides a condition report for individual subsystems. Thus, replacement could be done by a non-expert or even earlier if no damage to the subsystems is visible. Therefore, the signal snippets are assigned to individual subsystems.

Preferably, the assignment is determined based on correlating the detected and/or obtained assignment signal and the vibration measurement signal. This can be done, for example, based on an additional reference signal, such as an overall machine rotational position of the rotating machine, a laser or a reflector indicator signal, etc. For example a shaft position is additionally recorded by means of reference sensors (and the rotational frequency is preferably determined at the same time). Characteristic values are then monitored which evaluate the level of the vibration (such as the vibration amplitude vRMS, RMS values of harmonic vibration components, and so on). In this way, the subsystem that causes the atypical vibration subsignal can be determined and replaced.

In a further preferred embodiment of the invention, an auto-correlation analysis of signal snippets based on different measurement signals and assigned to the same subsystem of the rotating machine is performed for identifying a potential fault state of the rotating machine. Hereby, in other words, the comparison of the signal snippet with itself takes place at another time. Accordingly, the temporal development of the subsystems can be monitored. In particular, in a case where all subsystems behave similarly in comparison to each other and, for example, "deteriorate", i.e. develop errors, this could remain undetected. A comparison among each other would not reveal any major differences, since all subsystems develop equally "badly". However, by comparing the same subsystem with itself at different times, for example after several days or weeks, it is possible to reliably detect such an overall deterioration.

According to another aspect of the present disclosure, a rotating machine configured for energy transfer having a plurality of subsystems, each subsystem comprising one cylinder, is provided, wherein the rotating machine further comprises a control unit adapted to perform a method according the invention.

The different embodiments of the disclosure described herein may be advantageously combined unless the contrary is indicated herein.

Reference is now made to the following figures, in order to describe preferred embodiments of the invention in more detail.

### Brief Description of the Drawings

Features will become apparent to those of ordinary skill in the art by describing in detail exemplary embodiments with reference to the attached drawings in which:
- Fig. 1: illustrates a first accelerometer signal of an axial 5-piston pump.
- Fig. 1b: illustrates an enlarged section of the first accelerometer signal of figure 1.
- Fig. 2: illustrates a second accelerometer signal of an axial 5-piston pump.
- Fig. 3: illustrates a sampled vibration measurement signal of the second accelerometer signal of figure 2.
- Fig. 4: illustrates a reference vibration subsignal of the second accelerometer signal of figure 2
- Fig. 5: illustrates a reference signal snippet of the second accelerometer signal of figure 2.
- Fig. 6: illustrates a method of monitoring a rotating machine configured for energy transfer having a plurality of subsystems according to an embodiment of the invention.

The invention is defined by the appended claims. The description that follows is subjected to this limitation. Any disclosure lying outside the scope of said claims is only intended for illustrative as well as comparative purposes.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### Detailed Description of the Drawings

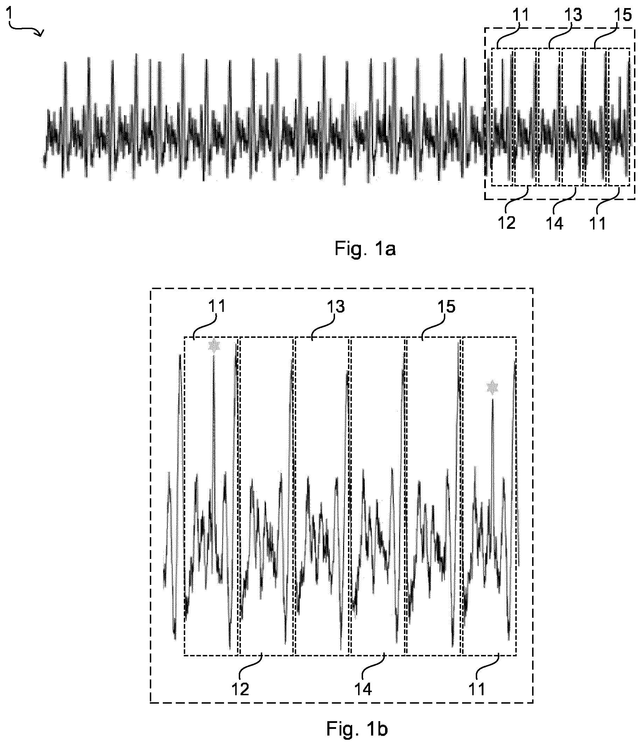

Fig. 1 illustrates a first accelerometer signal of an axial 5-piston pump. This is therefore a first measurement signal of a vibration 1 of the rotating machine. The signal comprises a duration that includes a plurality of full revolutions of the rotating machine. Accordingly, corresponding sections of the first measurement signal of a vibration 1 repeat at periodic intervals. The rotating machine is an axial piston pump with 5 subsystems, each subsystem comprising a cylinder and a piston, as well as further not further mentioned but usual components. The dashed rectangle represents a part of the first vibration measurement signal 1, which comprises one revolution of the rotating machine.

Fig. 1b illustrates an enlarged section marked by the dashed dotted rectangle of the first accelerometer signal of figure 1. This part comprises five segments 11 to 15 of the first measurement signal 1, each assigned to one subsystem and being due to the vibrations of this subsystem. The first vibration measurement signal 1 indicates that a deflection marked by an asterisk in figure 1b is different from the other 4 segments that do not have this deflection, which indicates a faulty subsystem.

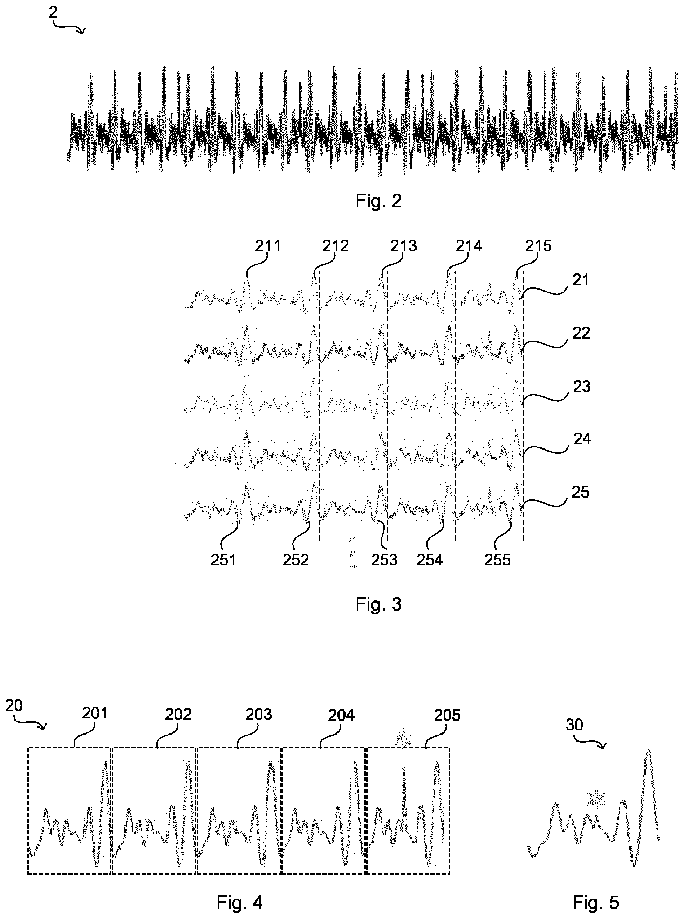

Fig. 2 illustrates a second accelerometer signal of an axial 5-piston pump. This is a second measurement signal of a vibration 2 of the rotating machine which is obtained by live measurements by means of accelerometers on the rotating machine and/or by reading data from a memory.

Fig. 3 illustrates a sampled second vibration measurement signal 2 of the second accelerometer signal of figure 2. The second vibration measurement signal 2 shown in figure 2 is sampled into a plurality of vibration subsignals 21 to 25, each vibration subsignal corresponding to one full revolution of the rotating machine. Further vibration subsignals are also available, but these are not shown for reasons of clarity. Each vibration subsignal 21 to 25 comprises five segments 2x1 to 2x5 delimited from each other by the dashed line of the second measurement signal 1, each assigned to one subsystem and being due to the vibrations of this subsystem (x=1...5). In other words, the first vibration subsignal 21 includes a first segment of the first vibration subsignal 211, a second segment of the first vibration subsignal 212, a third segment of the first vibration subsignal 213, a fourth segment of the first vibration subsignal 214, and a fifth segment of the first vibration subsignal 215. The same applies to the second vibration subsignal, and so on. Thus, there are now several vibration subsignals 21 to 25, each comprising a number of segments 2x1 to 2x5 corresponding to the number of subsystems, the segments of each vibration subsignal being arranged in the same order as in another vibration subsignal. Each vibration subsignal 21 to 25 thus comprises a signal at a different point in time, but all vibration subsignals have been measured in the same way.

Fig. 4 illustrates a reference vibration subsignal 20 of the second accelerometer signal of figure 2. The reference vibration subsignal 20 is determined based on an average of the plurality of vibration subsignals 21 to 25. Consequently, the reference vibration subsignal 20 also comprises sections, each assigned to a subsystem. These sections are the first to fifth signal snippets 201 to 205. The reference vibration subsignal 20 can be considered to be a "axial pump fingerprint". The signal snippets 201 to 205 are thus the fingerprints of one relevant subsystem. An asterisk marks an additional local extremum that occurs only in signal snippet 205, which is why signal snippet 205 is different from the others, indicating a potential error.

Fig. 5 illustrates a reference signal snippet 30 of the second accelerometer signal of figure 2. The reference vibration subsignal 20 shown in figure 4 is sampled into a plurality of signal snippets 201 to 205, each signal snippet 201 to 205 assigned to one subsystem of the rotating machine. The reference signal snippet 30 is determined based on an average of the plurality of signal snippets. In reference signal snippet 30, which is preferred for comparison, this extremum appears only suggestively because it has been attenuated by averaging. A cross-correlation analysis of each of signal snippets 201-205, representing the averaged subsystems, with reference signal snippet 30, representing a reference subsystem, would show that the subsystems assigned to the signal snippets 201-204 correlate well, though not perfectly, while the subsystem assigned to the signal snippet 205 correlates much less.

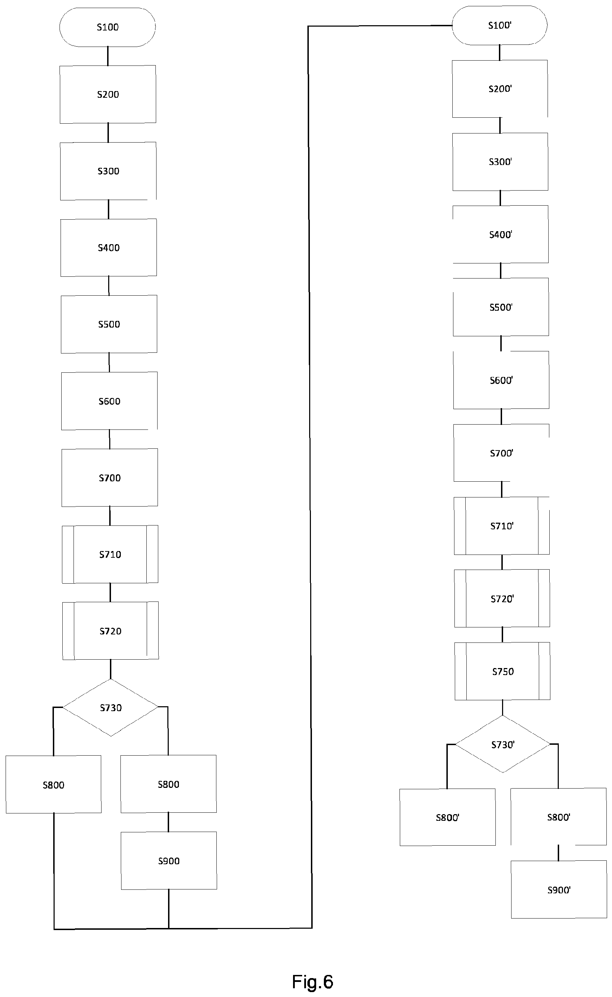

Fig. 6 illustrates a method of monitoring a rotating machine configured for energy transfer having a plurality of subsystems according to an embodiment of the invention. In a first step S100 the second vibration measurement signal 2 of the rotating machine shown in figure 2 is obtained. The measurements in step S100 are preferably done every 30 minutes for a length 2s.

In step S200 a rotational frequency of the rotating machine is determined. Preferably, the rotational frequency is determined based on a detected sensor value and/or the second vibration measurement signal 2. The rotation frequency of the rotating machine is a main component in the frequency spectrum of the generated mechanical vibrations, so it is possible to determine the rotational frequency on the basis of the second vibration measurement signal 2. Preferably light barriers or other switching sensors are used to measure the time it takes for a rotating machine to complete one revolution. Accordingly, the rotational speed can then be determined.

In step S300 the second vibration measurement signal 2 is sampled into a plurality of vibration subsignals 21 to 25. The sampling of the second vibrational measurement signal 2 is based on the rotational frequency. The sampling is supported and made more precise by the previously determined rotational frequency. Based on the knowledge about the number of subsystems as well as the rotational frequency in combination with the also known time length of the second vibration measurement signal 2, it is possible to perform an exact division of the whole signal into the vibration subsignals 21 to 25, which correspond exactly to one full revolution of the rotating machine.

In step S400 a reference vibration subsignal 20 is determined. The vibration subsignals 21 to 25 are averaged to eliminate stochastic noise, such as pressure pulsations and pulsations due to the operation of the machine. After this step S400, an average reference vibration subsignal 20 per revolution is obtained, which can be considered as a "pump fingerprint".

Afterwards in step S500 the reference vibration subsignal 20 is sampled into a plurality of signal snippets 201 to 205. The reference vibration subsignal 20, pump fingerprint, is cut (not shown) into signal snippets 201 to 205, wherein each of these signal snippets 201 to 205relates to one subsystem with its cylinder and piston wherein each subsystem may also comprise washers, O-rings, etc. Each signal snippet 201 to 205is thus the fingerprint of one relevant subsystem.

In step S600 a reference signal snippet 30 is determined. Thus, the reference signal snippet 30 is determined that is representative of the plurality of subsystems. If the method according to the invention is carried out for the first time after commissioning, a reference signal snippet 30 is provided which can be regarded as error-free behavior and is therefore advantageous for further comparisons.

In step S700 a cross-correlation analysis of the plurality of signal snippets 201 to 205 is performed. The cross-correlation analysis comprises determining at least one deviation between the reference signal snippet 30 and at least one of the plurality of signal snippets 201 to 205 which is performed in step S710. Further, the plurality of signal snippets 201 to 205 are sorted in step S720 based on the previously determined respective deviations.

Subsequently a comparison of the at least one deviation with a first threshold value and a second threshold value is performed in step S730. The first and the second threshold value are preferably relative threshold values. The potential fault of the rotating machine is determined when the at least one deviation exceeds the first threshold value. In step S800 a warning message is outputted if at least one deviation exceeds the first threshold and the machine is additionally stopped in step S900 if at least one deviation exceeds the first threshold and the second threshold.

According to an additionally preferred embodiment, the method further comprises obtaining at least one other measurement signal of a vibration of the rotating machine and performing the method according to the invention for the at least one other measurement signal. This takes place in step S100' in which the other measurement signal of a vibration of the rotating machine is obtained.

Accordingly, in step S200' one other rotational frequency of the rotating machine is determined followed by sampling the other vibration measurement signal into one other plurality of vibration subsignals based on the other rotational frequency in step S300'.

After that one other reference vibration subsignal is determined in step S400'.

In step S500' the other reference vibration subsignal is sampled into one other plurality of signal snippets.

Moreover, in step S600' one other reference signal snippet is obtained.

In step S700' then follows performing a cross-correlation analysis of the other plurality of signal snippets. This comprises in step S710' determining deviations between the other reference signal snippet and at least one of the other plurality of signal snippets. Afterwards the other plurality of signal snippets is sorted in step S720'.

In step S750 an auto-correlation analysis of signal snippets based on different measurement signals and assigned to the same subsystem of the rotating machine is performed for identifying a potential fault state of the rotating machine. In other words, the signal snippets 201 to 205 based on the second vibration measurement signal 2 are compared with the other signal snippets based on the other vibration measurement signal. In each case, signal snippets are compared with other signal snippets that are assigned to the same subsystem. The main difference, however, is that the signal snippets and the other signal snippets provide information about the respective subsystems at different times. For example, one vibration measurement signal may be compared with another vibration measurement signal received after the above-mentioned interval of 30 minutes. The comparison can also cover larger intervals, for example, a comparison of signal snippets of one vibration measurement signal with signal snippets of another vibration measurement signal received one week later is preferred. In this way, a development over time can be advantageously monitored. Also the subsequent measurements and auto-correlation may be repeated multiple times in order to obtain time series information of the vibrational data for each subsystem individually.

In step S800' a warning message is outputted and/or in step S900' the machine is stopped. This depends on the detected deviations between the at least one other plurality of signal snippets, where there can be deviations among each other and/or deviations to another referenced signal snippet. Preferably, the deviations that lead to a warning and/or a stop also include deviations that were determined in the course of an auto-correlation analysis.

### Reference signs

- 1: first measurement signal of a vibration / first vibration measurement signal
- 11: segment of a first subsystem of the measurement signal
- 12: segment of a second subsystem of the measurement signal
- 13: segment of a third subsystem of the measurement signal
- 14: segment of a fourth subsystem of the measurement signal
- 15: segment of a fifth subsystem of the measurement signal
- 2: second measurement signal of a vibration / second vibration measurement signal
- 20: reference vibration subsignal
- 201: first signal snippet
- 202: second signal snippet
- 203: third signal snippet
- 204: fourth signal snippet
- 205: fifth signal snippet
- 21: first vibration subsignal
- 211: first segment of the first vibration subsignal
- 212: second segment of the first vibration subsignal
- 213: third segment of the first vibration subsignal
- 214: fourth segment of the first vibration subsignal
- 215: fifth segment of the first vibration subsignal
- 22: second vibration subsignal
- 23: third vibration subsignal
- 24: fourth vibration subsignal
- 25: fifth vibration subsignal
- 251: first segment of the fifth vibration subsignal
- 252: second segment of the fifth vibration subsignal
- 253: third segment of the fifth vibration subsignal
- 254: fourth segment of the fifth vibration subsignal
- 255: fifth segment of the fifth vibration subsignal
- 30: reference signal snippet
- S100: Obtaining a measurement signal of a vibration of the rotating machine
- S200: Determining a rotational frequency of the rotating machine
- S300: Sampling the vibration measurement signal into a plurality of vibration subsignals
- S400: Determining a reference vibration subsignal
- S500: Sampling the reference vibration subsignal into a plurality of signal snippets
- S600: Determining a reference signal snippet
- S700: Performing a cross-correlation analysis of the plurality of signal snippets
- S710: Determining at least one deviation between the reference signal snippet and at least one of the plurality of signal snippets
- S720: sorting the plurality of signal snippets
- S730: performing a comparison of the at least one deviation with a first threshold value and a second threshold value
- S800: outputting a warning message
- S900: stopping the machine
- S100': Obtaining one other measurement signal of a vibration of the rotating machine
- S200': Determining one other rotational frequency of the rotating machine
- S300': Sampling the other vibration measurement signal into one other plurality of vibration subsignals
- S400': Determining one other reference vibration subsignal
- S500': Sampling the other reference vibration subsignal into one other plurality of signal snippets
- S600': Determining one other reference signal snippet
- S700': Performing a cross-correlation analysis of the other plurality of signal snippets
- S710': Determining deviations between the other reference signal snippet and at least one of the other plurality of signal snippets
- S720': sorting the other plurality of signal snippets
- S750: Performing an auto-correlation analysis of signal snippets
- S800': outputting a warning message
- S900': stopping the machine

## Claims

1. Method of monitoring a rotating machine configured for energy transfer and having a plurality of subsystems, each subsystem comprising one cylinder, the method comprising the steps:
Obtaining a measurement signal of a vibration (2) of the rotating machine;
Sampling the vibration measurement signal (2) into a plurality of vibration subsignals (21, 22, 23, 24, 25), each vibration subsignal (21, 22, 23, 24, 25) corresponding to one full revolution of the rotating machine;
Determining a reference vibration subsignal (20) based on an average of the plurality of vibration subsignals (21, 22, 23, 24, 25);
Sampling the reference vibration subsignal (20) into a plurality of signal snippets (201, 202, 203, 204, 205), each signal snippet (201, 202, 203, 204, 205) being assigned to one subsystem of the rotating machine, wherein each signal snippet (201, 202, 203, 204, 205) corresponds to 1/n of a full rotation of the rotating machine, where n is equal to the number of subsystems; and
Performing a cross-correlation analysis of the plurality of signal snippets (201, 202, 203, 204, 205) for identifying a potential fault state of the rotating machine, wherein a breakdown of a correlation between the signal snippets (201, 202, 203, 204, 205) indicates the potential fault state.

2. Method according to claim 1, wherein the cross-correlation analysis comprises:
Performing a comparison of the plurality of signal snippets (201, 202, 203, 204, 205) among each other; and/or
Determining deviations between the plurality of signal snippets (201, 202, 203, 204, 205) among each other.

3. Method according to any one of the preceding claims, wherein the cross-correlation analysis comprises:
Determining a reference signal snippet (30) based on an average of the plurality of signal snippets (201, 202, 203, 204, 205); and
Performing a comparison of the reference signal snippet (30) with at least one signal snippet (201, 202, 203, 204, 205); and/or
Determining at least one deviation between the reference signal snippet (30) and at least one of the plurality of signal snippets (201, 202, 203, 204, 205).

4. Method according to claim 2 or 3, wherein the method further comprises:
Performing a comparison of the at least one deviation with a first threshold value.

5. The method of claim 4, wherein the method further comprises:
Determining the potential fault of the rotating machine when the at least one deviation exceeds the first threshold value.

6. Method according to any one of the preceding claims, wherein the method further comprises:
Outputting a warning message and/or stopping the rotating the machine when the potential fault of the rotating machine is identified.

7. Method according to claim 4, wherein the method further comprises:
Performing a comparison of the at least one deviation with the first threshold value and a second threshold value;
Outputting a warning message if at least one deviation exceeds the first threshold; and
Stopping the machine if at least one deviation exceeds the first threshold and the second threshold.

8. Method according to any one of the preceding claims, wherein the method further comprises:
Determining a rotational frequency of the rotating machine,
wherein the sampling of the vibrational measurement signal is based on the rotational frequency.

9. Method according to claim 8, wherein the rotational frequency is determined based on a detected sensor value and/or the vibration measurement signal (2).

10. Method according to claim 1, wherein the method further comprises:
Obtaining at least one other measurement signal of a vibration of the rotating machine and performing the method of claim 1 for the at least one other measurement signal.

11. Method of claim 10, wherein the method further comprises:
Determining deviations between the plurality of signal snippets (201, 202, 203, 204, 205) obtained based on the measurement signal;
Determining deviations between the at least one other plurality of signal snippets obtained based on the at least one other measurement signal; and
Sorting the plurality of signal snippets (201, 202, 203, 204, 205) and the at least one other plurality of signal snippets based on the respective deviations.

12. Method according to any one of the preceding claims, wherein the method further comprises:
Determining an assignment of the subsystems to the assigned signal snippets (201, 202, 203, 204, 205) based on a detected and/or obtained assignment signal.

13. Method according to claim 12, wherein the assignment is determined based on correlating the detected and/or obtained assignment signal and the vibration measurement signal (2).

14. Method according to claim 10 or 11, the method further comprising the step of:
Performing an auto-correlation analysis of signal snippets (201,202,203,204,205) based on different measurement signals and assigned to the same subsystem of the rotating machine configured for identifying a potential fault state of the rotating machine.

15. Rotating machine configured for energy transfer having a plurality of subsystems, each subsystem comprising one cylinder, comprising a control unit adapted to perform a method according to any one of the preceding claims.

## Patentansprüche

1. Verfahren zum Überwachen einer rotierenden Maschine, die für Energieübertragung konfiguriert ist und mehrere Teilsysteme aufweist, wobei jedes Teilsystem einen Zylinder umfasst, wobei das Verfahren die folgenden Schritte umfasst:
Erfassen eines Messsignals einer Schwingung (2) der rotierenden Maschine;
Abtasten des Schwingungsmesssignals (2) in mehrere Schwingungs-Teilsignale (21, 22, 23, 24, 25), wobei jedes Schwingungs-Teilsignal (21, 22, 23, 24, 25) einer vollständigen □mdrehung der rotierenden Maschine entspricht;
Bestimmen eines Referenz-Schwingungs-Teilsignals (20) auf der Grundlage eines Durchschnitts der mehreren Schwingungs-Teilsignale (21, 22, 23, 24, 25);
Abtasten des Referenz-Schwingungs-Teilsignals (20) in eine Vielzahl von Signalschnipseln (201, 202, 203, 204, 205), von denen jedes einem Teilsystem der rotierenden Maschine zugeordnet ist, wobei jedes Signalschnipsel (201, 202, 203, 204, 205) 1/n einer vollständigen 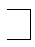 mdrehung der rotierenden Maschine entspricht, wobei n gleich der Anzahl der Teilsysteme ist; und
Durchführen einer Kreuzkorrelationsanalyse der Vielzahl von Signalschnipseln (201, 202, 203, 204, 205) zum Erkennen eines potenziellen Fehlerzustands der rotierenden Maschine, wobei ein Zusammenbruch einer Korrelation zwischen den Signalschnipseln (201, 202, 203, 204, 205) den potenziellen Fehlerzustand anzeigt.

2. Verfahren nach Anspruch 1, wobei die Kreuzkorrelationsanalyse Folgendes umfasst:
Durchführen eines Vergleichs der Vielzahl von Signalschnipseln (201, 202, 203, 204, 205) untereinander; und/oder
Bestimmen von Abweichungen zwischen der Vielzahl von Signalschnipseln (201, 202, 203, 204, 205) untereinander.

3. Verfahren nach einem der vorstehenden Ansprüche, wobei die Kreuzkorrelationsanalyse Folgendes umfasst:
Bestimmen eines Referenzsignalschnipsels (30) auf der Grundlage eines Durchschnitts der Vielzahl von Signalschnipseln (201, 202, 203, 204, 205); und
Durchführen eines Vergleichs des Referenzsignalschnipsels (30) mit mindestens einem Signalschnipsel (201, 202, 203, 204, 205); und/oder
Bestimmen mindestens einer Abweichung zwischen dem Referenzsignalschnipsel (30) und mindestens einem der Vielzahl von Signalschnipseln (201, 202, 203, 204, 205).

4. Verfahren nach Anspruch 2 oder 3, wobei das Verfahren ferner Folgendes umfasst:
Durchführen eines Vergleichs der mindestens einen Abweichung mit einem ersten Schwellenwert.

5. Verfahren nach Anspruch 4, wobei das Verfahren ferner Folgendes umfasst:
Bestimmen des potenziellen Fehlers der rotierenden Maschine, wenn die mindestens eine Abweichung den ersten Schwellenwert überschreitet.

6. Verfahren nach einem der vorstehenden Ansprüche, wobei das Verfahren ferner Folgendes umfasst:
Ausgeben einer Warnmeldung und/oder Anhalten der Drehbewegung der Maschine, wenn der potenzielle Fehler der rotierenden Maschine erkannt wird.

7. Verfahren nach Anspruch 4, wobei das Verfahren ferner Folgendes umfasst:
Durchführen eines Vergleichs der mindestens einen Abweichung mit dem ersten Schwellenwert und einem zweiten Schwellenwert;
Ausgeben einer Warnmeldung, wenn mindestens eine Abweichung den ersten Schwellenwert überschreitet; und
Anhalten der Maschine, wenn mindestens eine Abweichung den ersten Schwellenwert und den zweiten Schwellenwert überschreitet.

8. Verfahren nach einem der vorstehenden Ansprüche, wobei das Verfahren ferner Folgendes umfasst:
Bestimmen einer Drehfrequenz der rotierenden Maschine,
wobei die Abtastung des Schwingungsmesssignals auf der Drehfrequenz basiert.

9. Verfahren nach Anspruch 8, wobei die Drehfrequenz auf der Grundlage eines erfassten Sensorwerts und/oder des Schwingungsmesssignals (2) bestimmt wird.

10. Verfahren nach Anspruch 1, wobei das Verfahren ferner Folgendes umfasst:
Erfassen mindestens eines weiteren Messsignals einer Schwingung der rotierenden Maschine und Durchführen des Verfahrens nach Anspruch 1 für das mindestens eine weitere Messsignal.

11. Verfahren nach Anspruch 10, wobei das Verfahren ferner Folgendes umfasst:
Bestimmen von Abweichungen zwischen der Vielzahl von Signalschnipseln (201, 202, 203, 204, 205), die auf der Grundlage des Messsignals erhalten wurden;
Bestimmen von Abweichungen zwischen der mindestens einen weiteren Vielzahl von Signalschnipseln, die auf der Grundlage des mindestens einen weiteren Messsignals erhalten wurden; und
Sortieren der Vielzahl von Signalschnipseln (201, 202, 203, 204, 205) und der mindestens einen weiteren Vielzahl von Signalschnipseln auf der Grundlage der jeweiligen Abweichungen.

12. Verfahren nach einem der vorstehenden Ansprüche, wobei das Verfahren ferner Folgendes umfasst:
Bestimmen einer Zuordnung der Teilsysteme zu den zugeordneten Signalschnipseln (201, 202, 203, 204, 205) auf der Grundlage eines erfassten und/oder erhaltenen Zuordnungssignals.

13. Verfahren nach Anspruch 12, wobei die Zuordnung auf der Grundlage einer Korrelation zwischen dem erfassten und/oder erhaltenen Zuordnungssignal und dem Schwingungsmesssignal (2) bestimmt wird.

14. Verfahren nach Anspruch 10 oder 11, wobei das Verfahren ferner den folgenden Schritt umfasst:
Durchführen einer Autokorrelationsanalyse von Signalschnipseln (201, 202, 203, 204, 205) auf der Grundlage unterschiedlicher Messsignale, die demselben Teilsystem der rotierenden Maschine zugeordnet sind, das zum Erkennen eines potenziellen Fehlerzustands der rotierenden Maschine konfiguriert ist.

15. Rotierende Maschine, die für Energieübertragung konfiguriert ist und mehrere Teilsysteme aufweist, wobei jedes Teilsystem einen Zylinder umfasst, mit einer Steuereinheit, die dazu ausgelegt ist, ein Verfahren nach einem der vorstehenden Ansprüche durchzuführen.

## Revendications

1. Procédé de surveillance d'une machine tournante configurée pour transmission énergique et comportant une pluralité de sous-systèmes, chaque sous-système comprenant un cylindre, le procédé comprenant les étapes suivantes :
obtenir un signal de mesure d'une vibration (2) de la machine tournante ;
échantillonner le signal de mesure de vibration (2) en une pluralité de sous-signaux de vibration (21, 22, 23, 24, 25), chaque sous-signal de vibration (21, 22, 23, 24, 25) correspondant à un tour complet de la machine tournante ;
déterminer un sous-signal de vibration de référence (20) sur la base d'une moyenne de la pluralité de sous-signaux de vibration (21, 22, 23, 24, 25) ;
échantillonner le sous-signal de vibration de référence (20) en une pluralité d'extraits de signal (201, 202, 203, 204, 205), chaque extrait de signal (201, 202, 203, 204, 205) étant assigné à un sous-système de la machine tournante, dans lequel chaque extrait de signal (201, 202, 203, 204, 205) correspond à 1/n d'une rotation complète de la machine tournante, où n est égal au nombre de sous-systèmes ; et
effectuer une analyse de corrélation croisée sur la pluralité d'extraits de signal (201, 202, 203, 204, 205) pour identifier un état de défaut potentiel de la machine tournante, dans lequel une rupture d'une corrélation entre les extraits de signal (201, 202, 203, 204, 205) indique l'état de défaut potentiel.

2. Procédé selon la revendication 1, dans lequel l'analyse de corrélation croisée comprend :
effectuer une comparaison entre l'un et l'autre de la pluralité d'extraits de signal (201, 202, 203, 204, 205) ; et/ou
déterminer des écarts entre l'un et l'autre de la pluralité d'extraits de signal (201, 202, 203, 204, 205).

3. Procédé selon l'une quelconque des revendications précédentes, dans lequel l'analyse de corrélation croisée comprend :
déterminer un extrait de signal de référence (30) sur la base d'une moyenne de la pluralité d'extraits de signal (201, 202, 203, 204, 205) ; et
effectuer une comparaison entre l'extrait de signal de référence (30) et au moins un extrait de signal (201, 202, 203, 204, 205) ; et/ou
déterminer au moins un écart entre l'extrait de signal de référence (30) et au moins un de la pluralité d'extraits de signal (201, 202, 203, 204, 205).

4. Procédé selon la revendication 2 ou 3, dans lequel le procédé comprend en outre :
effectuer une comparaison entre l'au moins un écart et une première valeur de seuil.

5. Procédé selon la revendication 4, dans lequel le procédé comprend en outre :
déterminer le défaut potentiel de la machine tournante lorsque l'au moins un écart dépasse la première valeur de seuil.

6. Procédé selon l'une quelconque des revendications précédentes, dans lequel le procédé comprend en outre :
émettre un message d'avertissement et/ou arrêter la rotation de la machine lorsque le défaut potentiel de la machine tournante est identifié.

7. Procédé selon la revendication 4, dans lequel le procédé comprend en outre :
effectuer une comparaison entre l'au moins un écart et la première valeur de seuil et une seconde valeur de seuil ;
émettre n message d'avertissement si au moins un écart dépasse le premier seuil ; et
arrêter la machine si au moins un écart dépasse le premier seuil et le second seuil.

8. Procédé selon l'une quelconque des revendications précédentes, dans lequel le procédé comprend en outre :
détermination une fréquence de rotation de la machine tournante,
dans lequel l'échantillonnage du signal de mesure de vibration est basé sur la fréquence de rotation.

9. Procédé selon la revendication 8, dans lequel la fréquence de rotation est déterminée sur la base d'une valeur de capteur détectée et/ou du signal de mesure de vibration (2).

10. Procédé selon la revendication 1, dans lequel le procédé comprend en outre :
obtenir au moins un autre signal de mesure d'une vibration de la machine tournante et mettre en œuvre le procédé selon la revendication 1 pour au moins un autre signal de mesure.

11. Procédé selon la revendication 10, dans lequel le procédé comprend en outre :
déterminer des écarts entre la pluralité d'extraits de signal (201, 202, 203, 204, 205) obtenus sur la base du signal de mesure ;
déterminer des écarts entre l'au moins une autre pluralité d'extraits de signal obtenus sur la base de l'au moins un autre signal de mesure ; et
trier la pluralité d'extraits de signal (201, 202, 203, 204, 205) et l'au moins une autre pluralité d'extraits de signal sur la base des écarts respectifs.

12. Procédé selon l'une quelconque des revendications précédentes, dans lequel le procédé comprend en outre :
déterminer une assignation des sous-systèmes aux extraits de signal assignés (201, 202, 203, 204, 205) sur la base d'un signal d'assignation détecté et/ou obtenu.

13. Procédé selon la revendication 12, dans lequel l'assignation est déterminée sur la base d'une corrélation entre le signal d'assignation détecté et/ou obtenu et le signal de mesure de vibration (2).

14. Procédé selon la revendication 10 ou 11, comprenant en outre l'étape suivante :
effectuer une analyse d'auto-corrélation d'extraits de signal (201,202,203,204,205) sur la base de différents signaux de mesure et assignés au même sous-système de la machine tournante configuré pour identifier un état de défaut potentiel de la machine tournante.

15. Machine tournante configurée pour transmission énergique et comportant une pluralité de sous-systèmes, chaque sous-système comprenant un cylindre, comprenant une unité de commande adaptée à mettre en œuvre un procédé selon l'une quelconque des revendications précédentes.
